# EUROPEAN PATENT APPLICATION

(11) **EP 4 295 657 A1**
(43) Date of publication of application: **27.12.2023**
(21) Application number: 23176661.9
(22) Date of filing: 01.06.2023
(51) Int. Cl.: A01B 69/00, A01B 63/111

(54) **METHODS OF LOCATING AGRICULTURAL IMPLEMENTS**

(30) Priority: 23.06.2022 US 202263366853 P
(71) Applicant: Agco Corporation, Duluth, Georgia 30096 (US)
(72) Inventor: BAYLIFF, Michael, Hesston, 67062 (US); SCHERTZ, Rex, Hesston, 67062 (US); STRODA, Wade L, Hesston, 67062 (US)
(74) Representative: AGCO Intellectual Property Department

(57) **Abstract**

A method includes calibrating a camera to detect a position of an implement relative to a tractor pulling the implement, traversing an agricultural field with the implement engaging soil of the field, capturing at least one image of the implement in the field by a camera carried by the tractor, and generating a first representation of a position of the implement relative to the field, using at least one computing device carried by the tractor. The calibration includes moving at least one of the tractor and the implement to each of a plurality of known positions, in series, relative to one another. At each of the known positions, at least one image of the implement is captured by the camera. Each of the known positions is correlated with the at least one image. The camera can alternatively be carried by the implement, and images of the tractor may be captured.

## Description

### FIELD

Embodiments of the present disclosure relate generally to agricultural machines and methods for operating such machines. In particular, the machines and methods may be used to detect the operating position of towed implements.

### BACKGROUND

Tillage implements are machines that are typically towed behind tractors to condition soil for improved moisture distribution. Tillage implements include ground-engaging tools such as shanks, tillage points, discs, *etc.* Planters are typically towed behind tractors, and include ground-engaging tools such as coulters, opening wheels, seed-delivery devices, sensors, closing wheels, *etc.*

In a typical agricultural tillage or planting operation, monitoring the health and function of the machine while the tools are engaged with the ground can be challenging, but important. Height, drift, lift, and overall health of the implement should be constantly monitored so that adjustments to maximize yield can be made in a timely manner. Typically, implement monitoring is performed by an operator periodically looking to the rear of the tractor at the implement, or by sensors on the implement that communicate with the tractor.

However, in some conditions, it is almost impossible to monitor the health of the machine while tools are engaged with the ground. Soil and crop residue can be thrown, which obscures vision, and dust can create a cloud that further limits visibility. In autonomous agricultural tillage and planter operations, these challenges of supervision while engaged with the ground may limit the effectiveness of sensors designed to assess the health and function of the implement.

### BRIEF SUMMARY

In some embodiments, a method includes calibrating a camera to detect a position of an implement relative to a tractor pulling the implement, traversing an agricultural field with the implement engaging soil of the field, capturing at least one image of the implement in the field by a camera carried by the tractor, and generating a first representation of a position of the implement relative to the field, using at least one computing device carried by the tractor. The calibration includes moving at least one of the tractor and the implement to each of a plurality of known positions, in series, relative to one another. At each of the known positions, at least one image of the implement is captured by the camera. Each of the known positions is correlated with the at least one image.

The position of the implement relative to the field may include a property selected from the group consisting of a height, a roll, a pitch, a drift, a lift, and a dirt angle.

The image(s) may be individual images and/or video, and may be selected from the group consisting of visible images, UV images, IR images, thermal images, radar representations, and lidar representations.

The method may optionally include capturing an image of a plurality of targets mounted on the implement, such as targets having contrasting colors. The plurality of targets may each comprise a target selected from the group consisting of a visual graphic, a reflector, a visual target, and a non-visible light target.

In some embodiments, a non-transitory computer-readable storage medium includes instructions that when executed by a computer, cause the computer to calibrate a camera to detect a position of an implement relative to a tractor pulling the implement, direct the camera to capture at least one image of the implement traversing an agricultural field and engaging soil of the field; and generate a first representation of a position of the implement relative to the field based on the at least one captured image of the implement traversing the field. The calibration includes moving at least one of the tractor and the implement to each of a plurality of known positions, in series, relative to one another. At each of the known positions, at least one image of the implement is captured by a camera carried by the tractor, and each of the known positions is correlated with the at least one image.

The first representation may include a property selected from the group consisting of a height, a roll, a pitch, a drift, a lift, and a dirt angle.

The camera may capture video of the implement traversing the agricultural field and engaging soil of the field. The camera may capture at least one image selected from the group consisting of a visible image, a UV image, an IR image, a thermal image, a radar representation, and a lidar representation.

The computer may direct the tractor to move the implement relative to the tractor to change a position of the implement relative to the field.

The computer may generate an alert if the position of the implement relative to the field is outside a preselected range.

In some embodiments, a method includes calibrating a camera to detect a position of an implement relative to a tractor pulling the implement, traversing an agricultural field with the implement engaging soil of the field, capturing at least one image of the tractor in the field by a camera carried by the implement, and generating a first representation of a position of the implement relative to the field, using at least one computing device carried by the tractor. The calibration includes moving at least one of the tractor and the implement to each of a plurality of known positions, in series, relative to one another. At each of the known positions, at least one image of the tractor is captured by the camera. Each of the known positions is correlated with the at least one image.

The position of the implement relative to the field may include a property selected from the group consisting of a height, a roll, a pitch, a drift, a lift, and a dirt angle.

The method may optionally include capturing at least one image of the tractor in the field by the camera. Capturing may comprise capturing at least one image. The image(s) may be individual images and/or video, and may be selected from the group consisting of visible images, UV images, IR images, thermal images, radar representations, and lidar representations.

The method may optionally include capturing at least one image of the tractor in the field by the camera comprising capturing an image of a plurality of targets mounted on the tractor. The plurality of targets may each comprise a plurality of contrasting colors. So, the method may optionally include capturing an image of a plurality of targets mounted on the tractor, such as targets having contrasting colors.

The plurality of targets may each comprise a target selected from the group consisting of a visual graphic, a reflector, a visual target, and a non-visible light target.

In some embodiments, a non-transitory computer-readable storage medium includes instructions that when executed by a computer, cause the computer to calibrate a camera carried by the implement to detect a position of a tractor relative to an implement pulled by the tractor, direct the camera to capture at least one image of the tractor traversing an agricultural field, and generate a first representation of a position of the implement relative to the field based on the at least one captured image of the tractor traversing the field. The calibration includes moving at least one of the tractor and the implement to each of a plurality of known positions, in series, relative to one another. At each of the known positions, at least one image of the tractor is captured by the camera, and each of the known positions is correlated with the at least one image.

The instructions may cause the computer to generate the first representation. The first representation may include a property selected from the group consisting of a height, a roll, a pitch, a drift, a lift, and a dirt angle.

The instructions may cause the computer to direct the camera to capture video of the tractor traversing the agricultural field.

The instructions may cause the computer to direct the camera to capture at least one image.

The camera may capture video of the tractor traversing the agricultural field. The camera may capture at least one image selected from the group consisting of a visible image, a UV image, an IR image, a thermal image, a radar representation, and a lidar representation.

The instructions may cause the computer to direct the tractor to move the implement relative to the tractor to change a position of the implement relative to the field.

The instructions may cause the computer to generate an alert if the position of the implement relative to the field is outside a preselected range.

Within the scope of this application it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified top view of a system including a tractor pulling an agricultural implement;
FIG. 2 is a simplified side view of the tractor and implement shown in FIG. 1;
FIG. 3 is a simplified rear view of the tractor and implement shown in FIG. 1;
FIG. 4 is a simplified flow chart illustrating a method of using the system shown in FIG. 1; and
FIG. 5 illustrates an example computer-readable storage medium comprising processor-executable instructions configured to embody methods such as the method illustrated in FIG. 4.

### DETAILED DESCRIPTION

The illustrations presented herein are not actual views of any combine harvester or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (*e.g.,* it includes the degree of error associated with measurement of the given parameter).

As used throughout, ranges are used as shorthand for describing each and every value that is within the range. Any value within the range can be selected as the terminus of the range.

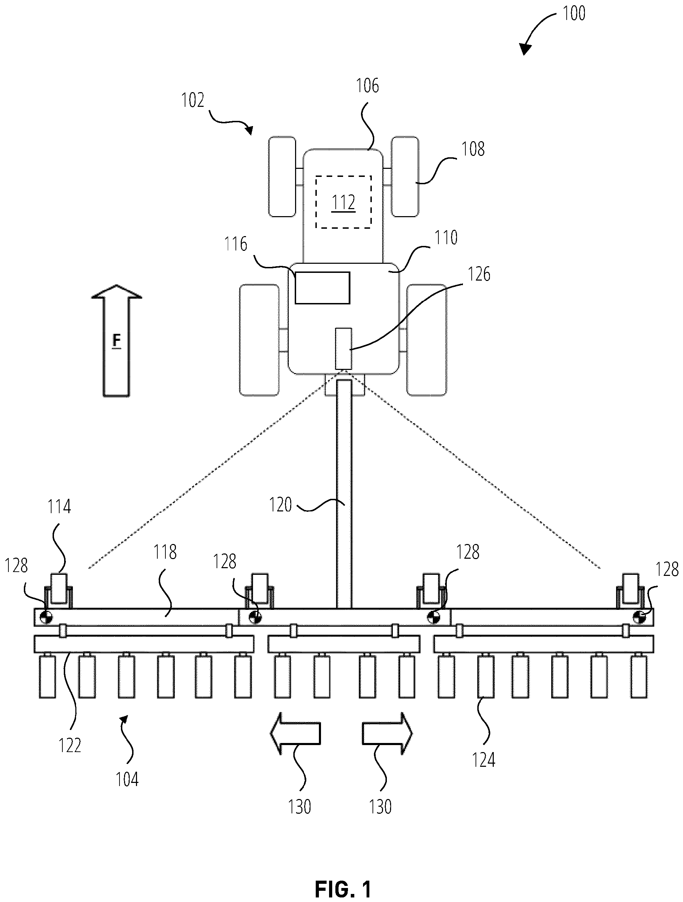

FIG. 1 is a simplified top view of a system 100 that includes a tractor 102 and an implement 104. The tractor 102 includes a chassis 106 supported by wheels 108, treads, or other ground-engaging elements. The chassis 106 has a cab 110 and carries an engine 112 configured to drive the wheels 114 to move the tractor 102 and tow the implement 104, generally in a forward direction F. The cab 110 includes a control environment 116, which may include one or more visible displays, control elements *(*e.g., an FNR joystick, a touchscreen, dials, knobs, *etc*.), audio components, *etc.* The control environment 116 may control the operation of the tractor 102 and/or the implement 104.

The implement 104 as shown includes a frame 118, a drawbar 120 coupling the frame 118 to the tractor 102, and a toolbar 122. The toolbar 122 carries row units 124 and is optionally supported by wheels 114. It should be understood that other configurations of implements may also be used, such as tillage implements, and that the particular design of the implement may vary from that shown in FIG. 1.

The 102 carries a camera 126 configured to capture images of the implement 104 to determine the position of the implement 104 relative to the tractor 102 and the surface of the field in which the implement 104 is operating. Though only one camera 126 is depicted in FIG. 1, any number of cameras 126 may be used, and may be mounted at any selected point on the tractor 102. The camera 126 may include a hi- or low-definition video camera, a thermal imaging camera, radar, lidar, or any other camera system. The camera 126 may be mounted at any selected point on the tractor 102 to help determine relationship of the implement 104 to the tractor 102.

The camera 126 may identify the state (*e.g.,* tools operating in-ground, tools not operating, traveling with tools above ground, *etc*.) of the implement 104 by observing the shape and features of the implement 104. In some embodiments, the implement 104 may optionally include one or more targets 128 to facilitate identification of the implement 104 or of specific points on the implement 104. Targets 128 may include visual graphics, reflectors, visual or non-visible light targets, *etc.,* and may be mounted vertically and/or horizontally on the implement 104 in the field of vision of the camera 126.

Though the camera 126 is shown mounted to the tractor 102 to view the implement 104, the camera 126 may alternatively be mounted to the implement 104, and directed at the tractor 102. In that case, the camera 126 would detect points on the tractor 102 to determine the position of the implement 104 relative to the tractor 102 and relative to the ground.

To use the system 100, the camera 126 may first be calibrated to detect the position of the implement 104.

As used herein, the term "drift" means and includes the deviation of the implement 104 left or right from a centerline, such as a centerline of the tractor 102 pulling the implement 104, or a preselected path of the implement 104. Drift is conceptually depicted by arrows 130 in FIG. 1.

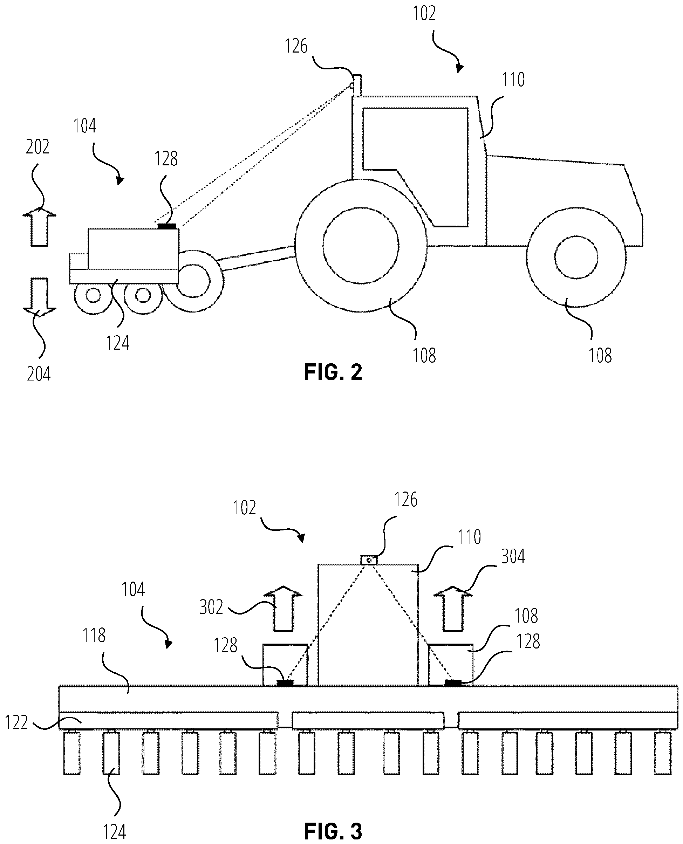

As used herein, the term "lift" means and includes the height of the implement 104 as a whole relative to ground or to a datum. FIG. 2 is a simplified side view of the tractor 102 and implement 104, with up and down arrows 202, 204 conceptually indicating the lift.

As used herein, the term "roll" means and includes rotation of the implement 104 as a whole around an axis parallel to the path of the tractor 102 or the implement 104. FIG. 3 is a simplified rear view of the tractor 102 and implement 104, with up and down arrows 302, 304 conceptually indicating the one side of the implement 104 being raised relative to the other. If the left side of the implement 104 lifts (arrow 302), the roll would be clockwise; if the right side of the implement 104 lifts (arrow 304), the roll would be counterclockwise.

As used herein, the term "pitch" means and includes rotation of the implement 104 as a whole around a horizontal axis perpendicular to the path of the tractor 102 or the implement 104. For example, the front of the implement 104 can be lower or higher than the rear of the implement 104, depending on the pitch value.

As used herein, the term "dirt angle" means and includes an angle of the implement 104 (as defined by a lower surface of the implement 104) relative to the ground. Dirt angle is related to the pitch, but also varies based on terrain.

The position of the implement 104 can include not only the physical location within the field (*i.e.,* latitude and longitude), but also the drift, lift, roll, pitch, dirt angle, or any other location-based parameter. In some embodiments, the position of the implement 104 may also include to position of particular parts of the implement 104 (*e.g.,* folding wings, *etc*.).

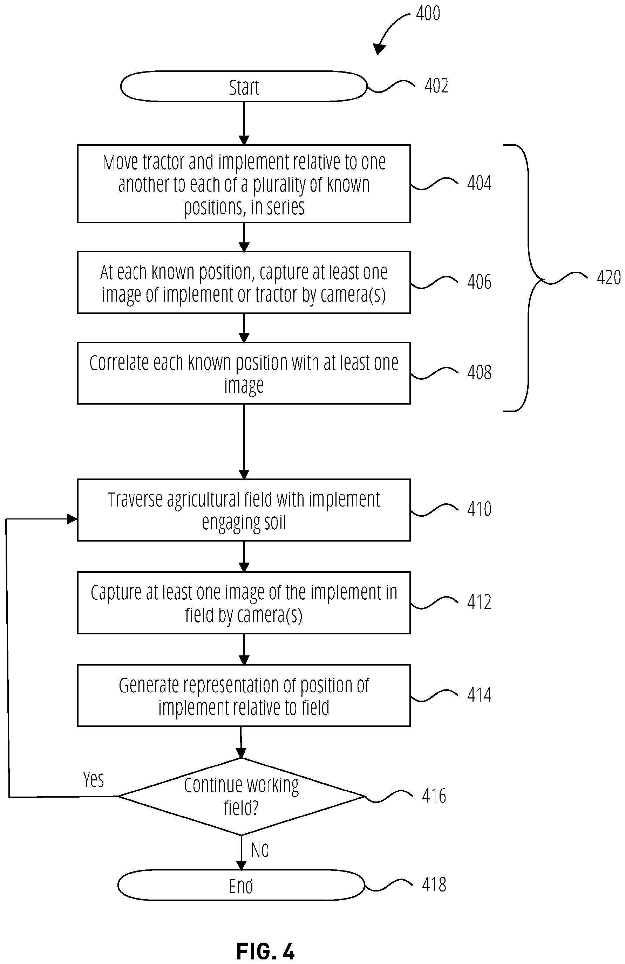

FIG. 4 is a simplified flow chart illustrating a method 400 of using the system 100 shown in FIG. 1. The method 400 starts at 402. The system 100 calibrates a camera 126 to detect a position of the implement 104 relative to the tractor 102 pulling the implement 104, indicated by group 420, which includes the actions in blocks 404-408.

In block 404, at least one of the tractor 102 and the implement 104 move relative to one another to each of a plurality of known positions, in series. In block 406, at least one image of the implement 104 or the tractor 102 is captured at each of the known positions by the camera 126. The camera 126 can capture, for example, a visible image, a UV image, an IR image, a thermal image, a radar representation, and/or a lidar representation. The image may be a part of a video feed or other similar stream of data. In block 408, each of the known positions is correlated with the at least one image captured at that position. The positions can include, for example, height, roll, pitch, drift, lift, and/or dirt angle. The positions may include the locations of known points on the implement 104 or tractor 102, such as edges of components, or targets of contrasting colors. The calibration (group 420) is typically performed before using the implement 104 by moving the implement 104 to extreme positions (*e.g.,* maximum and minimum height, *etc*.). In some embodiments, the calibration may be performed again at a later time, such as to correct or verify a prior calibration.

In block 410, the tractor 102 traverses an agricultural field with the implement 104 engaging soil of the field. The camera 126 captures at least one image of the implement 104 or the tractor 102 in the field, in block 412. In block 414, at least one computing device carried by the tractor 102 generates a first representation of a position of the implement 104 relative to the field. In some embodiments, a visible, audible, or tactile alert may be generated to signal to the operator of the tractor 102 the position of the implement 104 (*e.g.,* that the implement 104 is operating outside a preselected range).

At decision block 416, if the tractor 102 continues in the field, the method 400 may repeat blocks 410-414. If the field work is complete, the method 400 ends at 418.

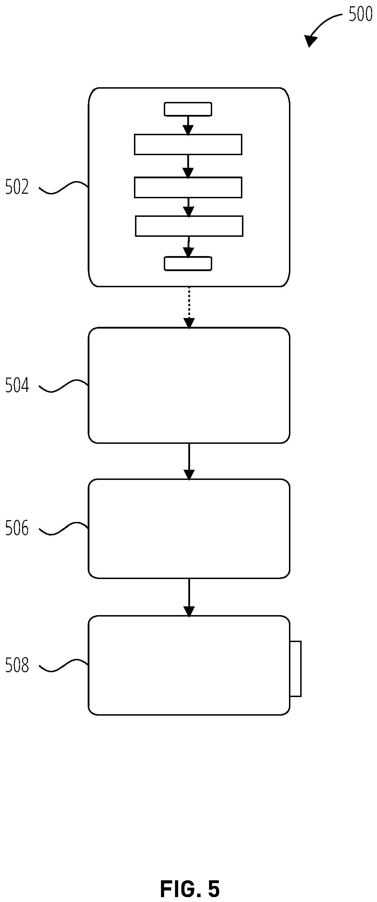

Still other embodiments involve a computer-readable storage medium (*e.g.,* a non-transitory computer-readable storage medium) having processor-executable instructions configured to implement one or more of the techniques presented herein. An example computer-readable medium that may be devised is illustrated in FIG. 5, wherein an implementation 500 includes a computer-readable storage medium 502 (*e.g.,* a flash drive, CD-R, DVD-R, application-specific integrated circuit (ASIC), field-programmable gate array (FPGA), a platter of a hard disk drive, *etc*.), on which is computer-readable data 504. This computer-readable data 504 in turn includes a set of processor-executable instructions 506 configured to operate according to one or more of the principles set forth herein. In some embodiments, the processor-executable instructions 506 may be configured to cause a computer associated with the tractor 102 (FIG. 1) to perform operations 508 when executed via a processing unit, such as at least some of the example method 400 depicted in FIG. 4. In other embodiments, the processor-executable instructions 506 may be configured to implement a system, such as at least some of the example system 100 depicted in FIG. 1. That is, the control environment 116 may include or be connected to the implementation 500 of FIG. 5. Many such computer-readable storage media may be devised by those of ordinary skill in the art that are configured to operate in accordance with one or more of the techniques described herein.

The system 100 and method 400 may be used to monitor and/or control the state of the implement 104, and may be used to improve field operations. Once the system 100 has been calibrated, an operator may set allowable limits for operation of the tractor 102 or implement 104, or may or provide set points for target height, dirt angle, roll, pitch, lift, *etc.*

The camera 126 may be integrated into the tractor 102 and with the control environment 116 for closed loop machine control or to display machine state on the control environment 116, or on another user interface such as display, tablet, remote monitoring, *etc.* Furthermore, information from the camera 126 may be used to generate an alert for the operator of the tractor 102 if the position of the implement 104 relative to the field is outside a preselected range.

In addition, the camera 126 may be part of a standalone kit to enable monitoring the state of the implement 104 separate from the user interface of the tractor 102. In such embodiments, the camera 126 may not provide closed loop control, but may still provide information and/or alerts to the operator.

All references cited herein are incorporated herein in their entireties. If there is a conflict between definitions herein and in an incorporated reference, the definition herein shall control.

## Claims

1. A method, comprising:
calibrating a camera to detect a position of an implement relative to a tractor pulling the implement, comprising:
moving at least one of the tractor and the implement to each of a plurality of known positions, in series, relative to one another;
at each of the known positions, capturing at least one image of the implement by a camera carried by the tractor; and
correlating each of the known positions with the at least one image;
traversing an agricultural field with the implement engaging soil of the field;
capturing at least one image of the implement in the field by the camera; and
generating a first representation, by at least one computing device carried by the tractor, of a position of the implement relative to the field.

2. The method of claim 1, wherein the position of the implement relative to the field comprises a property selected from the group consisting of a height, a roll, a pitch, a drift, a lift, and a dirt angle.

3. The method of claim 1 or 2, wherein capturing at least one image of the implement in the field by the camera comprises capturing at least one image selected from the group consisting of a visible image, a UV image, an IR image, a thermal image, a radar representation, and a lidar representation.

4. The method of any one of claims 1 to 3, wherein capturing at least one image of the implement in the field by the camera comprises capturing video of the implement in the field.

5. The method of any one of claims 1 to 4, wherein capturing at least one image of the implement in the field by the camera comprises capturing an image of a plurality of targets mounted on the implement.

6. The method of claim 5, wherein the plurality of targets each comprise a plurality of contrasting colors.

7. The method of claim 5, wherein the plurality of targets each comprise a target selected from the group consisting of a visual graphic, a reflector, a visual target, and a non-visible light target.

8. A non-transitory computer-readable storage medium, the computer-readable storage medium including instructions that when executed by a computer, cause the computer to:
calibrate a camera to detect a position of an implement relative to a tractor pulling the implement, comprising:
move at least one of the tractor and the implement to each of a plurality of known positions, in series, relative to one another;
at each of the known positions, capture at least one image of the implement by a camera carried by the tractor; and
correlate each of the known positions with the at least one image;
direct the camera to capture at least one image of the implement traversing an agricultural field and engaging soil of the field; and
generate a first representation of a position of the implement relative to the field based on the at least one captured image of the implement traversing the field.

9. The non-transitory computer-readable storage medium of claim 8, wherein the instructions cause the computer to generate the first representation comprising a property selected from the group consisting of a height, a roll, a pitch, a drift, a lift, and a dirt angle.

10. The non-transitory computer-readable storage medium of claim 8 or 9, wherein the instructions cause the computer to direct the camera to capture video of the implement traversing the agricultural field and engaging soil of the field.

11. The non-transitory computer-readable storage medium of any one of claims 8 to 10, wherein the instructions cause the computer to direct the camera to capture at least one image selected from the group consisting of a visible image, a UV image, an IR image, a thermal image, a radar representation, and a lidar representation.

12. The non-transitory computer-readable storage medium of any one of claims 8 to 11, wherein the instructions cause the computer to direct the tractor to move the implement relative to the tractor to change a position of the implement relative to the field.

13. The non-transitory computer-readable storage medium of any one of claims 8 to 12, wherein the instructions cause the computer to generate an alert if the position of the implement relative to the field is outside a preselected range.

14. A method, comprising:
calibrating a camera to detect a position of an implement relative to a tractor pulling the implement, comprising:
moving at least one of the tractor and the implement to each of a plurality of known positions, in series, relative to one another;
at each of the known positions, capturing at least one image of the tractor by a camera carried by the implement; and
correlating each of the known positions with the at least one image;
traversing an agricultural field with the implement engaging soil of the field;
capturing at least one image of the tractor in the field by the implement; and
generating a first representation, by at least one computing device carried by the tractor, of a position of the implement relative to the field.

15. The method of claim 14, wherein the position of the implement relative to the field comprises a property selected from the group consisting of a height, a roll, a pitch, a drift, a lift, and a dirt angle.
